**Europäisches Patentamt**

**European Patent Office**

**Office européen des brevets**

(19)

(11) Veröffentlichungsnummer: **0 203 399 B1**

(12) **EUROPÄISCHE PATENTSCHRIFT**

(45) Veröffentlichungstag der Patentschrift: **19.12.90**

(21) Anmeldenummer: **86105883.2**

(22) Anmeldetag: **29.04.86**

(51) Int. Cl.⁵: **B 60 R 13/00**, B 32 B 27/32, C 08 L 23/10, C 08 L 23/16

(54) **Witterungsbeständige weichmacherfreie Folie insbesondere für Kraftfahrzeuge sowie Verfahren zur Herstellung der Folie.**

(30) Priorität: **28.05.85 DE 3519064**

(43) Veröffentlichungstag der Anmeldung:
**03.12.86 Patentblatt 86/49**

(45) Bekanntmachung des Hinweises auf die Patenterteilung:
**19.12.90 Patentblatt 90/51**

(84) Benannte Vertragsstaaten:
**AT BE CH DE FR GB IT LI LU NL SE**

(56) Entgegenhaltungen:
**EP-A-0 039 397**
**DE-A-2 644 644**

(73) Patentinhaber: **Hüls Troisdorf Aktiengesellschaft**
**Postfach 11 65**
**D-5210 Troisdorf (DE)**

(72) Erfinder: **Breitscheidel, Hans-Ulrich**
**Kapellenstrasse 43a**
**D-5200 Siegburg (DE)**
Erfinder: **Kautz, Rudolf**
**Drosselweg 5**
**D-5202 Hennef 1 (DE)**
Erfinder: **Kühnel, Werner**
**D-5206 Neunkirchen-Schöneshof (DE)**
Erfinder: **Simm, Manfred**
**Güldenbergstrasse 1**
**D-5210 Troisdorf (DE)**
Erfinder: **Spielau, Paul, Dr.**
**Van-Gogh-Platz 10**
**D-5210 Troisdorf-Eschmar (DE)**
Erfinder: **Weiss, Richard, Dr.**
**Stresemannstrasse 16**
**D-5210 Troisdorf (DE)**

**Beschreibung**

Die Erfindung betrifft eine witterungsbeständige, weichmacherfreie, unvernetzte und tiefziehbare Folie, insbesondere zur Verwendung bei der Innen- und Außenausstattung von Kraftfahrzeugen, auf Basis von Ethylen-Propylen-Dien-Terpolymeren, Homo- und/oder Copolymeren von Propylen und ggf. Füllstoffen und üblichen Zusatzstoffen, hergestellt durch Extrudieren oder Kalandrieren mit einer Foliendicke von etwa 0,2 bis 3 mm, sowie ein Verfahren zum Herstellen solcher Folien.

Für die Innenverkleidung und Ausstattung von Kraftfahrzeugen, wie beispielsweise Seitenverkleidungen, Crashpads, Armaturbretter, Kopfstützen, Himmel oder an Außenflächen als Korrosionsschutz werden bis heute üblicherweise Weich-PVC Folien verwendet. Weich-PVC Folien haben jedoch den Nachteil, dass der Weichmacher im Laufe der Zeit ausschwitzt bzw. verdunstet und unerwünschte Beschläge beispielsweise auf den Windschutzscheiben hinterläßt, die immer weider entfernt werden müssen. Desweiteren ist auch der Gehalt an Polyvinylchlorid nachteilig, da bei Anbringung der Folie im Bereich der Abgasführung und des Motors die Gefahr der Bildung von die Korrosion förderndem Chlorwasserstoff infolge der hohen Abgastemperaturen besteht. Auch tritt durch den im Laufe der Zeit auftretenden Weichmacherverlust eine Versprödung der Folie ein, die sich nachteilig auf ihre Funktiontüchtigkeit und Lebensdauer auswirkt, insbesondere bei Minustemperaturen.

In der DE—OS 28 06 726 wird eine als Dröhnschutz ausgebildete Schutzschicht für Kraftfahrzeugböden beschrieben, die eine Trägerschicht auf Basis von Polyolefinen, insbesondere Ethylen-Propylen-Kautschuk, und mindestens 30 Gew.-% vorzugweise mindestens 70 Gew.-% Füllstoffen auf Basis Bitumen, weichmachender Substanzen, wie Öle und akustisch wirksame Mineralstoffe wie Talkum, Schiefermehl, Graphit, Glimmer enthält. Diese überwegend weichplastische und einen Schallschutz bewirkende Schwerfolie wird mittels Vulkanisationskleber oder Heißsiegelkleber dauerhaft mit dem Karosserieblech verbunden. Die hohen Füllstoffanteile dieser Folie reduzieren jedoch die Festigkeiten der Folie und begünstiger bei kalandrierten Folien den sogenannten Weißbruch. Da die Folien bei der Applizierung auf die Karosserieteile verformt werden, ist Weißbruch in jedem Fall aus optischen Gründen unerwünscht. Auch der Schutz gegen Steinschlag ist nicht ausreichend bei dieser Schutzschicht.

Aus der DE—O 27 32 969 sind Abmischungen und unvernetzten Ethylen-Propylen-Squenzpolymeren mit isotaktischem Polypropylen bekannt geworden, die beispielsweise durch Formpressen oder Extrudieren zu Formartikeln wie Stoßfänger, Sitzschalen, Verblendungen, Armaturenbretter, Spoiler, Schalttafeln, Lenkradummantelungen sowie Ski-Schuhen verarbeitet werden können. Diese Abmischungen weisen jedoch je nach Zusammensetzung entweder keine ausreichende Kältflexibilität oder keine ausreichende Wärmeformbeständigkeit auf.

Aus der DE—OS 27 42 910 ist ein thermoplastisches Elastomergemisch aus 25 bis 85 Gew.-% eines praktisch amorphen Ethylen-Propylen-Mischpolymerisates und 15 is 75 Gew.-% eines kristallinen Blockmischpolymerisates von Propylen bekannt, die sich besonders gut zur Herstellung von Kabelumhüllungen und Stoßstangen für Kraftfahrzeuge eignen. Wie jedoch in der DE—OS 28 21 342 ausgeführt, sind die thermoplstischen Elastomergemische der DE—O 27 42 910 in bezug auf die Härte, die Zugfestigkeit, bessere Beständigkeit gegen hohe Temperaturen durchaus verbesserungsbedürftig für eine Reihe von Anwendungen, und werden beispielsweise in diesen Eigenschaften durch eine Formmasse und hieraus hergestellte Formteile gemäß der DE—O 28 21 342 übertroffen.

In der DE—O 28 21 342 sind thermoplastische Elastomergemische, enthaltend 30 bis 75 Teile kristallines isotaktisches Propylen-Homopolymerisat und 25 bis 70 Teile eines im wesentlichen amorphen kautschukartigen Ethylen-Propylen-Polymerisates und maximal 15 Teile Polyethylen die Anteilig das Propylen-Homopolymerisat ersetzen, beschrieben. Diese Gemische weisen zwar gegenüber binären Formmassen teils verbesserte Eigenschaften auf, jedoch zeigt sich, dass für extreme Beanspruchungen die mechanischen Eigenschaften der aus der DE—O 28 21 342 bekannten Elastomergemische, insbesondere was die Kerbschlagzähigkeit, Zugfestigkeit und Kälteflexibilität angeht, durchaus verbesserungsbedürftigt sind. Dies ist insbesondere auch auf die eingesetzten im wesentlichen amorphen kautschulartigen Ethylen-Propylen-Polymerisate zurückzuführen. Andererseits werden höher kristalline EPDM oder EPM-Kautschuke, die als teilkristallin zu bezeichnen sind, mit einer Kristallisationstemperatur (DSC-Maximum-Temperatur) ab/über 24°C als für die in den DE—O 27 42 910 und 28 21 342 angegebenen Einsatzgebiete als ungeeignet bewertet.

Aus der Firmenzeitschrift "Der Lichtbogen" von CHW Hüls, September 1974, Nr. 174, Seiten 18 bis 22 ist die Verwendung von Ethylen-Propylen-Kautschuk sowohl für Spritzgußteile für den Einsatz im Automobilbau als auch für Dachfolien u.a. bekannt.

Der Erfindung liegt die Aufgabe zugrunde, eine witterungsbeständige, weichmacherfreie, unvernetzte und tiefziehbare Folie zu schaffen, die sich zur Verwendung bei der Innen- und Außenausstattung von Kraftfahrzeugen eignet und den für diese Anwendung charakteristischen hohen Beanspruchungen sowohl bezüglich mechanischer Eigenschaften, wie Zugfestigkeit, hoher Kälteflexibilität, Kerbschlagzähigkeit und Wärmeformbeständigkeit, Witterungsbeständigkeit gerecht wird. Die Erfindung schlägt eine Folie auf Basis eines thermoplastischen Elastomergemisches vor, die gekennzeichnet ist durch einen Gehalt von 65 bis 25

EP 0 203 399 B1

Gew.-% eines teilkristallinen Ethylen-Propylen-Dien-Terpolymer mit

65 bis 82 Gew.-% Ethylen
18 bis 35 Gew.-% Propylen
3 bis 8 Gew.-% Terkomponente,

mit einem Schmelzindex MFI (230/5) von 0,5 bis 2,0 g/10 min, einer Zugfestigkeit von mindestens 10 N/mm² und einer DSC-Maximumtemperatur von mindestens 40°C, 35 bis 75 Gew.-% Propylen-Homopolymer und/ oder Propylen-Copolymer mit einem Schmelzindex MFI (230/2,16) kleiner als 2 g/10 min, aber nicht kleiner als 0,2 g/10 min, 0 bis 10 Gew.-% Füllstoffe, wie Kreide, Kaolin, Talkum, Ruß, Kieselerde, Kieselsäureanhydrid oder dergl. oder Mischungen hiervon, sowie auf 100 Gew.-Teile der vorgenannten Kunststoffe

0,1 bis 1,0 Gew.-Teile Stabilisatoren wie sterisch gehinderte phenolische Antioxydantien, phenolische Phosphite, Thioester aliphatischer Carbonsäuren,
0,1 bis 2 Gew.-Teile Gleitmittel, wie Metallsalze der Carbonsäuren, Montansäureester, hydrierte Kohlenwasserstoffharze
0 bis 5 Gew.-Teile Farbmittel
0 bis 4 Gew.-Teile aliphatische und/oder naphthenische Extenderöle.

Die erfindungsgemäße füllstofffreie bzw. nahezu füllstofffreie Folie aus Ethylen-Propylen-Dien-Terpolymer (EPDM) und Polypropylen erfüllt ein Bündel von Eigenschaftsanforderungen, die auch die im Kraftfahrzeuganwendungsbereich geforderte hohe Lebensdauer und Funktiontüchtigkeit gewährleistet. Die erfindungsgemäße Folie kann durch Verformungsverahren, wie Teifziehverfahren, Vakuumverformen, oder auch Kaltverformung zu gewünschten Formteilen verarbeitet werden.

Die erfindungsgemäße Folie zeichnet sich insbesondere durch die nachfolgende aufgeführten Eigenschaften aus:
1. Sehr gute Steinschlagfestigkeit
2. gute Kältebeständigkeit
3. hohe Reißfestigkeit und Dehnung
4. hohe Weiterreißfestigkeit
5. geringe Feuchtigkeitsempfindlichkeit
6. gute Abriebfestigkeit
7. ausrechiende Benzinbeständigkeit
8. gute Licht- und Witterungsbeständigkeit
9. matte Oberflächen geeignet zur Prägung
10. gute Tiefziehbarkeit
11. Temperaturbeständigkeit eines geformten Teiles aus der Folie, d.h. gute Wärmeformbeständigkeit
12. kein Rückschrumpfen unter Sonnenbestrahlung eines geformten Teiles aus der Folie
13. kein Weißbruch der Folie beim Verformen
14. Erhalt einer Prägung der Folie auch beim und nach dem Verformen
15. Korrosionsschutz.

Die erfindungsgemäße Folie signet sich damit insbesondere für die Innen- und Außenausstattung von Kraftfahrzeugen, da sie gue Festigkeitswerte bei guter Witterungsbeständigkeit und Lebensdauer sowohl bei hohen Temperaturen als auch bei niedrigen Temperaturen aufweist und auch eine hohe Resistenz bezüglich Abrieb, Steinschlag und ähnlicher mechanischer oberflächlicher Beanspruchungen aufweist.

Die Folie kann auch in entsprechender Einfärbung hergestellt werden und kann infolge ihrer guten Tiefziehbarkeit in vielfältiger Form einzeln oder in Kombination mit weiteren Materialien zu entsprechenden Formteilen geformt werden.

Die erfindungsgemäß ausgewählten und für die Folie eingesetzten teilkristallinen Ethylen-Propylen-Dien-Terpolymere mit einer sehr hohen Zugfestigkeit bzw. Rießfestigkeit, bevorzugt von mindestens 15 N/mm², deren Kristallinitätsgrad mit der DSC-Maximumtemperatur korreliert ist und mindestens etwa 40°C beträgt, im Vorzugsbereich mindestens etwa 43°C, ermöglichen in Zusammenwirken mit den ausgewählten Polypropylenen die Herstellung der Folie durch Kalandrieren oder Extrusion mit den beschriebenen Eigenschaften.

Als Terkomponente kommen hierbei insbesondere Ethylidenorbenen infrage, jedoch auch Dicyklopentadien,

Da das Ausmaß der Kristallinität auch mit dem Ethylengehalt ebenso wie mit der Zugfestigkeit korreliert, werden in einer bevorzugten Ausführung der Erfindung Ethylen-Propylen-Dien-Terpolymere mit einem Ethylengehalt von mindestens 70 Gw.-% eingesetzt.

Die teilkristallinen EPDM's haben auch gegenüber den amorphen oder nahezu amorphen EPDM's den bearibeitungstechnischen Vorteil, daß sie in krümeliger Form anfallen und auch pelletisierbar sind und daher leicht dosierbar und mischbar und daher direkt auf kontinuierlich arbeitenden Mischmaschinen

3

verarbeitbar. Die amorphen Kautschuke hingegen sind gummiartig und liegen in Klumpen- oder Ballenform vor und sind nicht ohne Zusätzepelletisierbar.

Die DSC-Maximumtemperatur der EPDM's wird mit dem Differential Scanning Kalorimeter ermittelt, ebenso die Kristallisationswärme. Auch letztere ist ein Maß für den Kristallinitätsgrad. Die Kristallisationswärme der erfindungsgemäß eingesetzten Ethylen-Propylen-Dien-Terpolymere sollte etwa mindestens 15 cal/g betragen.

Als Propylen-Homopolymer und/oder Propylen-Copolymer werden solche mit einem Schmelzindex MFI (230/2,16) kleiner als 2 g/10 min, bevorzugt kleiner als 1 g/10 min, jedoch nicht kleiner als 0,2 g/10 min eingesetzt. Hierbei handelt es sich insbesondere um ausgewählte Propylen-Homopolymere, statistiche Propylen-Copolymere, Block-Propylen-Copolymer mit 5 bis 20 Gew.-% copolymerisiertem Ethylen, die einen besonders niedrigen Schmelsindex aufweisen. Diese ausgewählten Polypropylene ermöglichen zusammen mit den eingesetzten Ethylen-Propylen-Dien-Terpolymeren, die gute Verarbeitung zu Folien durch Kalandrieren, welches ein besonders wirtschaftliches Verfahren ist oder auch durch Extrusion. Hierbei werden Folien mit einer Dicke von etwa 0,2 bis 1,0 mm bevorzugt durch das Kalandrieren hergestellt, während Folien in Dicken von etwa 0,7 bis 3 oder mehr Millimeter durch Extrusion hergestellt werden können. Es ist auch möglich, dünnere Folien zu dickeren durch Laminieren oder Duplieren von kalandrierten und/oder extrudierten Folien herzustellen. Da Polypropylen sehr stark klebt, ist es außerordentlich schwierig, Polypropylen unter Vermeidung von Verklebungen an den Kalanderwalzen zu kalandrieren. Auch um dieses Verkleben des Polypropylens beim Kalandrieren zu vermeiden, sind enge Verfahrensparameter der angegebenen Art inzuhalten. Hierbei ist auch die Auswahl der Stabilisatoren und Gleitmittel von Bedeutng. Bei der Herstellung der Folie durch Kalandrieren ist jedoch zu beachten, dass Polypropylen mit einem MFI (230°C/21,6 N) kleiner 0,1 g/10 min sich nicht mehr für den Einsatz eignet, da sich nicht mehr ausreichend Kalandrieren läßt.

Um den Abbau der Polymere während des Plastifizierens und Kalandrierens bzw. Extrudierens zu verhindern und gleichzeitig möglichst hohe Verarbeitungstemperaturen zu ermöglichen, werden insbesondere Stabilisatoren und Alterungsschutzmittel für Polyolefine, insbesonder auf Basis sterisch gehinderter phenolischer Antioxydantien phenolischer Phosphite, Thioester aliphatischer Carbonsäuren, ggf. Mischungen hiervon vorgesehen, jedoch in relativ geringen Mengen.

Beispielsweise kommen als Stabilisatoren Pentaerythrit-tetra-ß-3,5-di-t-butyl-4-hydroxyphenylpropionat, 2,2'-Methylen-bis-(4-methyl-6-t-butylphenol) Distearylpentaerythritdiphosphit und 2,6-Di-t-butyl-4-methylphenol infrage.

Als Gleitmittel für die Verarbeitung werden insbesondere Metallsalze von Carbonsäuren, wie beispielsweise Calciumseifen, Calciumstearat, Zinksteart sowie als weitere Verarbeitungshilfsmittel insbesondere Montansäureester und/oder hydrierte Kohlenwasserstoffharze zugegeben.

Auch andere Hilfstoffe, wie Flammschutzmittel, UV-Absorber können in der Folie enthalten sein.

Die erfindungsgemäß eingesetzten Massen lassen sich sehr überraschend gut verarbeiten, auch leichter als z.B. nur Polypropylen zu kalandrierten oder extrudierten Folien.

Da Füllstoffe im allgemeinen die Festigkeitseigenschaften der Folie reduzieren, werden Füllstoffe bei der erfindungsgemäße Folie nur in geringen Mengen zugesetzt, wobei es sich einerseits um anorganische pulvrige Füllstoffe, wie Kreide, Talkum, Kalk oder Kaolin handeln kann oder aber bevorzugt auch um sogenannte verstärkende Füllstoffe wie halbaktive oder aktive Ruße, Kieselerde, Kieselsäureanhydrid, Glasfasern, oder Mischungen der vorgenannten Füllstoffe. Auch Glimmer oder Schwerspat können in geringen Mengen vorgehesen werden. Die Füllstoffe sollen sehr feinteilig sein, damit sie sich auch nicht bei der späteren Verarbeitung der Folie durch Thermoverformung oder Verpressen usw. nachteilig bemerkbar machen und auch die Oberflächengüte nicht beeinträchtigen. Die füllstoffe sollten eine Teilchengröße, bestimmt beim Durchgang durch ein 30 µm Sieb nicht übherschreiten, vorzugsweise jedoch unter 20 bis 10 µm Sieb gehen.

Es ist natürlich auch möglich, der folie noch Farbmittel zuzusetzen, die jedoch ebenfalls sehr feinteilig wie die anderen Füllstoffe sein sollten, sodaß sie sich auch nicht nachteilig bei einer weiteren Verarbeitung bzw. Verformung der Folie störend bemerkbar machen. Als Farbmittel können neben Farbstoffen, Pigmenten, wie Titandioxyd, auch Ruß in geringen Mengen eingesetzt werden, der zudem noch den Vorteil der Erhöhung der Witterungsbeständigkeit der Trägerschicht aufweist. Hierbei genügen bereits geringe Anteile in der Trägerschicht.

Zusätzlich können im Hinblick auf die Verarbeitbarkeit der eingesetzten Ethylen-Propylen-Polymere auch elastifizierende Substanzen in geringen Mengen unter ~4 Gew.-Teile bezogen auf 100 Gew.-Teile Polymer, wie aliphatische und/oder naphtenische Extenderöle, zugegeben werden.

Eine bevorzugte Ausbildung der Folie gemäß der Erfindung mit hohen Elastomeranteilen, die besonders gute Eigenschaften in der Kälte, wie hohe Schlagzähigkeit aufweist, zeichnet sich durch die Zusammensetzung gemäß dem Merkmal des Anspruches 2 aus.

Für solche Anwendungsbereiche im Kraftfahrzeug, bei denen keine extreme Kälteschlagzähigkeit gefordert wird, beispielsweise bei der Innenausstattung, wird erfindungsgemäß eine etwa härter eingestellte Folie vorgeschlagen, die durch die Merkmale des Anspruches 3 gekennzeichnet ist.

Die Folie gemäß der Erfindung läßt sich besonders gut durch Prägen der Oberfläche in matter oder genarbter Struktur veredeln. Hierbei zeigt sich die Qualität des Materials der Folie, da auch bei einer nachfolgenden Verformung der Folie, z.B. durch Vakuumtiefziehen, die Prägung der Oberfläche der Folie

4

einwandfrei erhalten bleibt. Es ist auch möglich, die Oberfläche der Folie ggf. zu bedrucken oder zu lackieren. Hierbei bedarf es bei Einsatz geeigneter Lacke, wie z.B. Zwei-Komponenten-Lacke keiner besonderen Vorbehandlung der Folienoberfläche.

Eine wesentlichen Eigenschaft der erfindungsgemäßen Folie ist ihre Tiefziehbarkeit, d.h. die Möglichkeit, insbesondere durch Warmverformung, wie Teifziehen, oder Verpressen, beispielsweise mittels Vakuum gegen eine entsprechende Form oder in einer geschlossenen Form, Formteile aus entsprechenden Zuschnitten der Folie herzustellen. Die hohe Flexibilität der Folie läßt einen hohen Verformungsgrad und damit eine gute Anpassung an vorgegebene Formen zu. Die erfindungsgemäße Folie ist jedoch auch so weitgehend biegsam und verformbar, natürlich auch in Abhängigkeit von der Dicke, dass sie bei geringen gewünschten Deformierungsgraden auch ohne Vorformung im erwärmten Zustand durch Kaltverformung auf entsprechend vorgeformte Teile aufgebracht werden kann. In jedem Fall zeichnet sich ein aus der erfindungsgemäßen Folie hergestelltes Formteil durch eine hohe Formtreue und Wärmeformbeständigkeit aus. Hierzu ist auch zu rechnen, dass die bei der Herstellung, z.B. durch Kalandrieren oder Extrudieren nachfolgend geprägte Oberfläche der Folie auch bei einer Warmeverförmung, beispielsweise Teifziehen, ihre Prägung beibehält infolge der guten Wärmeformbeständigkeit der Folie.

Für die Innenausstattung eines Kraftfahrzeuges können beispielsweise Formteile wie Seitenverkleidungen, Türinnenverkleidungen, Armstützen, Tunnelabdeckungen, Armaturenbretter, Himmel ganz oder teilweise aus der erfindungsgemäßen Folie hergestellt werden. Es ist auch möglich, die Folie mit weiteren Folien oder textilen Flächengebilden zu verbinden, zu kaschieren oder auch beispielsweise zu Crashpads zu verarbeiten oder beispielsweise mit Polyurethanschaum zu hinterschäumen.

Im Außenbereich eines Kraftfahrzeuges kann die erfindungsgemäße Folie direkt oder als Formteil als Schutzabdeckung aufgebracht und verwendet werden.

Eine erfindungsgemäße Verfahrensweise zum Herstellen der Folie einer erfindungsgemäße Zusammensetzung ist den Merkmalen def Anspruchs 14 entnehmbar.

Für die gute Verarbeitbarkeit der Formmasse zum Herstellen gleichmäßiger lunkerfriere Folien durch bevorzugt Kalandrieren oder auch Extrudieren ist erfindungsgemäß der Schmelzindex MFI (230/5) der Kunststoffmasse im Bereich von etwa 0,8 bis etwa 10 g/10 min., bevorzugt im Bereich von 1 bis etwa 6 g/10 min. zu wählen. Da die ausgewählten teilkristallinen EPDM's in Partikelform vorliegen oder hergstellt werden können, können die Materialien in einfacher Weise gemischt, z.B. Heiz-Kühl-Mischer-Kombination und dosiert und mit Hilfe der für Kunststoffe üblichen Apparaturen wie Kneter bzw. Extruder bzw. Schneckenkneter bei einer Massetemperatur von 165 bis etwa 210°C plastifiziert werden. Diese Masse kann in einem weiteren zweiten Plastifizierungsschritt bei höheren Temperaturen weiter plastifiziert und homogenisiert werden, beispielsweise auf Walzen oder in einem Strainer oder um dann einem Kalander zugeführt zu werden. Der Kalander sollte wenigstens vier Walzen aufweisen, die in der bekannten Form, wie I, L, F oder Z angeordnet sein können. Für das Kalandrieren der erfindungsgemäßen Folien sollten die Kalanderwalzen in Arbeitsrichtung gesehen eine leicht abfallende. Temperatur aufweisen, wobei die beiden ersten Einzugswalzen die höchste Temperatur, vorzugsweise 190 bis 230°C aufweisen sollten, während die letzte Kalanderwalze eine um 20 bis 30°C niedrigere Temperatur haben kann, da sie im wesentlichen der Glättung und Kalibrierung dient. Die erfindungsgemäße Folie kann mit Walzenabzugsgeschwindigkeiten und damit Produktionsgeschwindigkeiten von mindestens 10 Meter je Minute und mehr, in Abhängigkeit von der Dicke der Folie, kalandriert werden.

Bei der Extrusion der erfindungsgemäßen Folie kann die Plastifizierung und Formgebung in einer Apparatur, d.h. in einem Extruder kontinuierlich erfolgen, wobei auch hier von der Einzugszone bis zur Ausstoßzone ein ansteigendes Temperaturgefälle, beginnend mit etwa 100°C bis maximal etwa 250°C vorgesehen wird. Sehr dicke Folien werden dann als Platten bezeichnet.

Bei der Herstellung der Folien durch Kalandrieren bzw. Extrudieren ist es möglich, direkt inline eine Oberflächenprägung auf einer Oberflächenseite der Folie durchzuführen gemäß den Merkmalen des Anspruches 15.

Für die Herstellung von Formteilen z.B. als Verkleidungsteile für ein Kraftfahrzeug werden aus der erfindungsgemäßen Folie entsprechend der Konfiguration des gewünschten Formteiles Stanzzuschnitte gefertigt, die dann auf Temperaturen von etwa 120 bis etwa 170°C vorgewärmt und dann unter Anwendung von Druck bzw. Vakuum zu der gewünschten Form verformt werden.

Die Folie läßt sich hierbei einwandfrei, d.h. ohne Faltenbildung und ohne Weißbruch, verformen. Als Verformungsverfahren kommen insbesondere die Teifziehverfahren, wie das Vakuumtiefziehn, das Vakuumdruckverfahren mit Positiv- oder Negativform zur Anwendung. Die so hergestellten Formteile zeigen eine sehr gute Ausformung, und eine außerordentliche gute Wärmeformbeständigkeit.

Die Folie kann auch durch Blasverformen zum Formteil mittels Oberdruck verarbeitet werden.

Die erfindungsgemäße Folie kann auch mit weiteren Flächengebilden zu Verbundfolien oder Mehrschichtfolien, z.B. durch Kaschieren oder mittels Haftvermittler verbunden werden. Insbesondere zeigen Verbunde der Folie mit Blechen oder Metallplatten oder-Folien gute Korrosionswiderstandsfestigkeit und Steifigkeit bei Kalverformbarkeit. Solche mit PP-EPDM-Folien kaschierte Metallbleche haben ein weites Anwendungsfeld.

Die erfindungsgemäße Folie kann auch Teil einer Mehrschichtfolie sein und beispielsweise mit textilen Flächengebilden verbunden werden. Für die Innenausstattung von Kraftfahrzeugen werden vielfach griffige und weiche Verkleidungsteile gewünscht, die beispielsweise durch Hinterfütterung von Weich-PVC-Folien mit Schaumstoff, insbesondere Weich-PVC-Schaum, bisher hergestellt werden. Allen Materialien, die jedoch Weichmacher enthalten, haften die eingangs erläuterten Nachteile, die durch aus Ausschwitzen der Weichmacher auftreten, an. Man ist daher bestrebt, auch weichmacherfreie, jedoch elastische Schaumstoffe für die Innenausstattung von Kraftfahrzeugen einzusetzen, wie beispielsweise vernetzte oder unvernetzte Polyolefin-Schaumstoffe, wie sie beispielsweise aus der DE—PS 16 94 130, DE—AS 16 94 194 oder DE—AS 24 17 557 u.a. bekanntgeworden sind. Da gewöhnliches Polyolefin, wie Polyethylen, unpolar ist, läßt es sich mit vielen Materialien nicht oder nur mit ungenügenden Haftfestigkeiten unmittelbar, d.h. ohne Haftvermittler, verbinden.

Es wurde nun überraschende gefunden, daß die erfindungsgemäße Folie sich unmittelbar haftfest thermo- oder flammkaschieren läßt mit einem vernetzten Polyolefin-Schaumstoff, bei dem in 100 Gew.-Teilen Polyolefinharz bzw. Polyolefinharzgemisch mindestens 15 Gew.-%, vorzugsweise mindestens 20 Gew.-%, an polaren copolymererisierten Gruppen enthalten sind. Als polare Monomere für die Herstellung des Polymerisates werden vorzugsweise Butylacrylat in einer Menge von wenigstens 15 Gew.-% oder Vinylacetat in einer Menge von wenigstens 20 Gew.-%, bezogen auf das Polyolefinharz bzw. Polyolefinharzgemisch, eingesetzt. Die für die Anwendung bei der Erfindung für den Schaumstoff geeigneten Polyolefinharze umfassen hierbei Hoch-, Mittel- oder Niederdruckpolyethylen, Ethylen-Propylen-Copolymere, Ethylen-Buten-Copolymere, Ethylen-Styrol-Copolymere, Ethylen-Vinylacetat-Copolymere, Ethylen-Acrylsäure-Copolymere, Ethylen-Acrylsäureester-Copolymere, Ethylen-Acrylsäuresalze-Copolymere, Polybutyen-1, Propylen-Buten-Copolymere bzw. Gemische zweier oder mehrerer dieser Polymeren.

Es ist auch möglich, geringere Mengen des Polyolefinharzes durch mit diesen mischbare Kautschuke oder mischbare Kunststoffe zu ersetzen, wobei jedoch der Gehalt an polaren copolymerisiertem Polymer dann auf die Gesamtmenge an Harz zu beziehen ist.

Die mischbaren Kautschukarten umfassen Naturkautschuk, Ethylen-Propylen-Kautschuk, Butylkautschuk, Polyisobutylen, Polybutadien, Polyisopren und Styrol-Butadien-Kautschuk.

Die mischbaren Kunststoffe umfassen Acrylnitril-Butadien-Styrol-Harze, Polystyrol, chlorierte Polyethylene, chlorierte Polypropylene und chlorsulfonierte Polyethylene.

Die Gesamtmenge des Kautschuks und/oder des Kunststoffs, welche damit vermischt werden, ist derjenigen des Polyolefins gleich oder kleiner und beträgt vorzugsweise 10 bis 45 Gewichtsteile pro 100 Gewichtsteile des Polyolefins.

Die vernetzen Polyolefin-Schaumstoffe, die zum Herstellen der erfindungsgemäßen Verbundfolie aus Polypropylen-Ethylen-Propylen-Dien-Terpolymer-Folie und Schaumstoffschicht eingesetzt werden, werden insbesondere durch peroxidische Vernetzung unter Verschäumen mit chemischen Treibmitteln hergestellt. Es können jedoch auch physikalisch vernetzte Polyolefinschaumstoffe verwendet werden, die dann kein Vernetzungsmittel enthalten.

Geeignete Vernetzungsmittel sind organische Peroxide, wie Dicumylperoxid, Di-tert.-Butylperoxid,
1,3-bis(tert.-Butylperoxiisopropyl)benzol,
2,5-Dimethyl-2,5-di(tert.-butylperoxi)hexan und
2,5-Dimethyl-2,5-di(tert.-butylperoxi)hexyn-3;
Azidverbindungen, wie
1,9-Nonan-bis-sulfonazid und
1,7-Heptan-bis(sulfonazid); und
Silicium enthaltendes Peroxid, wie Silylperoxid.

Das Vernetzungsmittel wird so ausgewählt, daß es sich thermische bei einer niedrigeren Temperatur als der Zersetzungstemperatur des zu verwendenden Treibmittels zersetzt.

Die Menge des Vernetzungsmittels hängt von dem Typ des Polyolefins und des Treibmittels und der Menge des Treibmittels ab und beträgt 0,01 bis 3 Gew.-Teile je 100 Teile Polyolefin.

Das Treibmittel hat eine höher als der Erweichungspunkt des Polyolefins liegende Zersetzungstemperatur und hat auch eine Zersetzungstemperatur, die höher als jene des Vernetzungsmittels ist. Es wird in einer Menge von 0,1 bis 30 Gew.-Teilen je 100 Teilen Harz verwendet. Das Treibmittel schließt beispielsweise
Azodicarbonamid,
Dinitrosopentamethylentetramin,
Bariumazodicarboxylat,
Hydroazodicarbonamid,
p-Toluolsulfonylsemicarbacit und
Trihydrazintriazin ein.

Polyolefin, Vernetzungsmittel und Treibmittel werden vor der thermischen Verschäumung unter Vermischen geknetet. Die Verknetung wird üblicherweise in einem Henschel-Mischer, einer Mischwalze, einem Banbury-Mischer oder Extruder durchgeführt Dabei muß sorgfältig vorgegangen werden, um das Vernetzungsmittel und das Treibmittel nicht zu zersetzen.

Die Harzmasse wird zu Platten, Folien, Teilchen etc. durch einen Extruder, eine Presse, Kalanderwalze etc. geformt. Bei dieser Verfahrensstufe ist es wichtig, die Zersetzung des Vernetzungsmittels und des Treibmittels wie bei dem Knetverfahren zu vermeiden.

Bei dem Verschäumungsverfahren wird die Erhitzung üblicherweise in einer Stufe durch Abheben der Temperatur auf einen derart hohen Wert durchgeführt, daß das Vernetzungsmittel und das Treibmittel zersetzt werden. Jedoch kann auch ein Zweistufen-Erhitzungsverfahren derart angewandt werden, daß zuerst das Vernetzungsmittel zersetzt und nachfolgend das Treibmittel durch weitere Temperaturerhöhungen zersetzt wird. Die Zersetzung des Vernetzungs- und Treibmittels kann unter Erhitzung unter hohem Druck durchgeführt werden, wobei sodann die Expansion durch Verringerung des Druckes ausgeführt werden kann. Vorläufig geformte, schäumbare Teilchen können in einer metallischen Form in geschäumte Produkte geschäumt werden.

Plattenartiges, schäumbares Material kann kontinuierlich in eine geschäumte Platte durch Erhitzung auf einem Drahtnetzförderer in einem Heißluftofen übergeführt werden.

Gemäß der Erfindung wurde gefunden, dass eine hohe Haftfestigkeit, die als Trennkraft nach DIN 53 357 gemessen wird, mit einem solchen Polyolefin-Schaumstoff erzielt wird, bei dem polare Mischpolymerisate, wie beispielsweise Ethylen-Butylacrylat und/oder Ethylen-Vinylacetat in ausreichenden Mengen vorhanden sind. Insbesondere hat sich ein vernetzter Polyolefin-Schaumstoff mit einem Butylacrylatgehalt von mehr als 9 Gew.-% vorzugsweise mehr als 15 Gew.-% als besonders geeignet zur Flammkaschierung mit einer PP/EPDM Folie erweisen. Bei hohen Kaschiergeschwindigkeiten erhält man Trennfestigkeiten, die über der Eigenfestigkeit des eingesetzten Schaumstoffes liegen.

Die Erfindung kann mit einem Polyolefin-Schaumstoff, der als Polyolefinharz ausschließlich ein polares Mischpolymerisat, wie Ethylen-Butylacrylat, Ethylenethylacrylat oder Ethylenvinylacetat enthält, realisiert werden. wenn ausreichende Gehalte von Vinylacetat und/oder Butylacrylat und/oder Ethylacrylat enthalten sind oder auch Abmischungen dieser Mischpolymerisate mit einem Polyethylen oder einem anderen Polyolefin, jedoch unter Einhaltung der vorgenannten Bedingungen.

Insbesondere können erfindungsgemäß Verbundfolien hergestellt werden, bei denen die Trennkraft zwischen PP/EPDM Folie und Schaumstoffschicht mindestens 8 N/5 cm vorzugsweise mehr als 12 N/5 cm beträgt und insbesondere höher als die Eigenfestigkeit des Schaumstoffes ist.

Der Vernetzungsgrad des eingesetzten Polyolefin-Schaumstoffes liegt in der Regel zwischen 60 und 80%, je nach Verfahrensführung. Bei den vernetzten Polyolefin-Schaumstoffen handelt es sich auch um überwiegend geschlossenzellige, elastische Schaumstoffe. Diese verleihen der erfindungsgemäß hergestellten Verbundfolie aus PP/EPDM Folie und Polyolefin-Schaumstoffschicht einen besonders weichen Griff des Verbundes. Darüber hinaus zeichnet sich auch die erfindungsgemäße Verbundfolie durch eine sehr gute Teifziehbarkeit aus, wobei auch die Schaumstruktur erhalten bleibt. Auch die Verbundfolie zeichnet sich durch besondere Leichtgewichtigkeit, hohe Kälteschlagzähigkeit und hohe Schlagzähigkeit aus.

Die erfindungsgemäße füllstoffreie bzw. nahezu füllstoffreie Folie aus Polypropylen und Ethylen-Propylen-Dien-Terpolymer erfüllt in Verbindung mit der spezieller Haftschaumschicht ein Bündel von Eigenschaftsforderunger die im Kraftfahrzeuganwendungsbereich eine hohe Lebensdauer und Funktionstüchtigkeit gewährleisten.

Für die Verbundfolie werden insbesondere Schaumstoffschichten im Bereich von etwa 2 bis 20 mm mit der PP/EPDM Folie kaschiert, und zwar ohne Haftvermittelerschicht, entweder im Flammkaschierverfahren oder durch Thermokashieren, wobei die miteinander zu verbindenden Schichten bei jedem der Verfahren vorzeitig auf über der Plastifizierungstemperatur des Kunststoffes liegenden Temperatur erwärmt und miteinander verbunden werden. Die Flammkaschierung wird mit an sich bekannten Vorrichtungen durchgeführt, wobei die geschwindigkeit von der Schaumstoffart und der Schaumstoffdicke abhängig ist. Auch hier zeigt sich, dass der acrylathaltige Polyolefinschaum dem vinylacetathaltigen überlegen ist, da bei ersterem auch bei höheren Kaschiergeschwindigkeiten eine gute Haftung erreicht wird.

Für die Verbundfolie werden insbesondere leichtgewichtige Schaumstoffe mit Raumgewichten von etwa 20 bis 70, vorzugsweise von etwa 20 bis 40 kg/m$^2$ eingesetzt.

Für die erfindungsgemäße Verbundfolie wird ein chemisch vernetzter Polyolefin-Schaumstoff bevorzugt, da dieser sich noch ausrechend nachträglich durch Tiefziehen oder dergl.—bleibend verformen läßt, auch in Verbindung mit der PP/EPDM Folie. Jedoch sind auch physikalisch vernetzte Polyolefinschäume verwendbar.

Bei den nachfolgenden Beispielen wird die Herstellung des thermoplastischen vernetzten Polyolefin-Schaumstoffes wie in der DE—PS 16 94 130 beschrieben durchgeführt, indem die Polymeren mit dem Triebmittel, dem Peroxid und eventuellen Zuschlagstoffen gemischt und compoundiert und anschließend über einen Extruder zu einer homogenen Matrix geformt werden. Die Verschäumung erfolgt direkt oder nach Zwischenlagerung in einem Wärmeofen bei Temperaturen von 200 bis 250°C. Die Menge an Treibmittelzusatz richtet sich nach der gewünschten Rohdichte.

Die Erfindung wird an den nachfolgenden Beispielen erläutert.

Die Prüfung der Eigenschaften erfolgte nach folgenden Meßmerkmalen:

Shorehärte D nach DIN 53505
Zugfesteigkeit nach DIN 54355
Mooney-Viskositätsbestimmung nach ASTM-D 1640
Schmelzindex MFI nach DIN 53/35
Trennfestigkeit nach DIN 53357
Wärmeformbeständigkeit nach Vicat gemäß DIN 53460
Rießfestigkeit nach DIN 53455
Rießdehnung nach DIN 53455 Streckspannung DIN 53455
Kälteschlagwert nach VDCh

Beispiel 1: Herstellung der Folie

60 Gew.-Teile Polypropylen-Copolymerisat mit einem Ethylengehalt von 10% und einem MFI (190/5) von 0,8 g/10 min. werden mit 40 Gew.-Teilen EPDM einer Mooney-Viskosität ML (1+4) 100°C von 85, einem MFI (230/5) von 0,8 g/10 min und einem Ethylengehalt von 67 Gew.-% einem Propylengehalt von 30 Gew.-% und einem Ethylidennorbonengehalt von 3 Gew.-% und einer Zugfestigkeit von 16,3 N/mm² und einer DSC-Maximum-Temperatur von 44°C mit 0,45 Gew.-Teilen von sterisch gehindertem Amin (Chimasorb® 944) und Benzotriazol (Tinuvin® 327) als Stabilisator, 0,15 Gew.-Teilen von Calciumstearat als Gleitmittel und 2 Gew.-Teilen Farbe (TiO₂) in einem Heizkühlmischer bei 70°C zu einer rieselfähigen Mischung verarbeitet, in einer Dopellschnecke bei Temperaturen bis zu 200°C plastifiziert und homogenisiert und einem Walzwerk zugeführt. Von diesem wird die Masse mit einer Temperatur von etwa 180—190°C einem Kalander zugeführt und zu einer Folie von 0,75 mm ausgezogen. Am Auslauf des Kalanders befindet sich eine Prägevorrichtung, mit der die gewünschte Oberflächenstruktur bei einer Prägetemperatur der Prägewalze von etwa 110°C und einem Prägedruck von 40 bar erzeugt wird. Die Folie besitzt eine Reißfestigkeit in Längserstreckung von 28 N/mm² und Reißdehnung in Längserstreckung von 635%, Kälteschlagwert von −55°C, Shorehärte D 50.

Die plastifizierte Masse hatte einen MFI (230/5) von 1,8 g/10 min.

Beispiel 2: Herstellung einer Folie

47 Gew.-Teile des in Beispiel 1 genannten Polypropylen-Copolymers werden mit 53 Gew.-Teilen des EPDM's aus Beispiel 1 und den übrigen Zuschlägen des Beispiels 1 in einem Heizkühlmischer bei 70°C vorgemischt, einem Zweiwellenkneter zugeführt und bei 170° bis 180°C plastifiziert und auf ein Walzwerk mit Temperaturen von etwa 180 bis 200°C gebracht. Ober einen Strainer erfolgt die Beschickung des Kalanders mit der auf etwa 190°C plastifizierten Masse, die zu einer Folie einer Dicke von 0,8 mm kalandriert wird mit nachfolgender Prägung. Die 0,8 mm starke Folie besitzt eine Reißfestigkeit in Längsrichtung von 26,5 N/mm² und eine Rießdehnung in Längsrichtung von 650% und eine Streckspannung in Längsrichtung von 10,6 N/mm², Shorehärte D von 49 und Kälteschlagwert nach VDCh von −55°C.

Der MFI (230/5) der Mischung betrug 1,6 g/10 min.

Beispiel 3: Herstellung einer Folie

Wie in Beispiel 2 beschrieben, wird eine Folie durch Kalandrierung hergestellt. Die Dicke der Folie betrug 0.3 mm, die Reißfestigkeit wurde mit 26 N/mm² und die Reißdehnung mit 670% gemessen. Der Kälteschlagwert nach VDCh betrug −55°C, die Shorehärte D 48.

Beispiel 4: Herstellung einer Folie

42 Gew.-Teile eines Polypropylen-Homopolymers mit einer Dichte von 0,9 g/ml und einem MFI (190/5) von 0,7 g/10 min werden mit 58 Gew.-Teilen des EPDM's aus Beispiel 1 in einem Heizkühlmischer vorgemischt, in einem Innenmischer plastifiziert und homogenisiert und über ein Walzwerk dem Kalander zugeführt, zur Folie einer Dicke von 0,8 mm ausgezogen und geprägt. Die Folie weist eine Reißfestigkeit in Längserstreckung von 25 N/mm² und eine Reißdehnung in Längserstreckung von 680% auf. Der MFI (230+5) der Mischung betrug 1,5 g/10 min.

Beispiel 5 bis 13: Herstellung von Schaumstoffen

Die Schaumstoffe zur Kaschierung der in den Beispielen 1 bis 4 hergestellten Folien wurden wie folgt hergestellt:

Jeweils 100 Gew.-Teile des in Tabelle 1 genannten Polyolefins bzw. Polyolefingemisches werden mit den ebenfalls in Tabelle 1 genannten Mengen an Azodicarbonamid und Dicumylperoxid homogen vermischt, zu einem homogenen Granulat durch Plastifizieren verarbeitet und durch anschließende Extrusion zu einer Matrix umgewandelt. Diese Matrix wird in einem Umluftofen bei 225°C zu einem Schaum verarbeitet dessen Rohdichte jeweils 30 kg/m³ betrug und dessen Dicke der Tabelle 1 zu entnehmen ist.

Die zur Herstellung des Schaumes gemäß Beispiel 6 benötigte Matrix wurde zusätzlich einseitig mit einer 230 µ dicken Polyethylenfolie kaschiert.

Der Ansatz des Beispiels 7 enthält kein Dicumylperoxid, da die Matrix vor der Verschäumung mit 9 Mrad Elektronenstrahl behandelt und dabei vernetzt wurde.

Die Beispiele 5, 6, 7, 8, 11 sind Vergleichsbeispeile.

Beispiel 14: (Vergleich)

Die im Beispiel 2 hergestellte Polypropylen-EPDM-Folie von 0,8 mm Dicke wurde an der Flammkaschieranlage mit einer Geschwindigkeit von 6,5 bzw. 8,0 m/min mit dem im Beispiel 5 hergestellten Polyethylenschaum der Dicke von 10 mm verbunden. Die Schälfestigkeit der beiden Substrate wude als Trennkraft nach DIN 53 357 gemessen. Die Trennfestigkeit ist in Tabelle 2 aufgeführt.

Beispiel 15: (Vergleich)

Es wurde ein Verbund wie in Beispiel 14 beschrieben hergestellt aus der Folie Beispiel 2 und dem Schaum aus Beispiel 6, wobei die mit PE-Folie belegte Seite des Schaumes mit der PP/EPDM-Folie kaschiert wurde. Die gemessenen Trennfestigkeiten sind in der Tabelle 2 enthalten.

Beispiel 16: (Vergleich)

Es wurde ein Verbund wie in Beispiel 14 beschrieben aus der Folie des Beispiels 2 und dem physikalisch vernetztem Schaum des Beispiels 7 mit 8,0 bzw. 10.0 m/min. Kaschiergeschwindigkeit hergestellt. Trennfestigkeiten finden sich in Tabelle 2.

Beispiel 17: (Vergleich)

Die Folie des Beispiels 3 wurde mit dem 9 Gew.-% Vinylacetat enthaltenden Schaum des Beispiels 8 bis 8,0 und 10,0 m/min flammkashiert. Die Trennfestigkeiten sind in Tabelle 2 aufgeführt.

Beispiel 18:

Es wurde ein Verbund durch Flammkaschieren aus der PP/EPDm-Folie des Beispiels 2 und dem 15 Gew.-% Vinylacetat enthaltenden Schaum aus Beispiel 9 bei 4,0; 6,5 und 8,0 m/min. hergestellt. Die gemessenen Trennfestigkeiten sind in Tabelle 2 enthalten.

Beispiel 19:

Die PP/EPDM-Folie des Beispiels 2 wurde mit dem 25 Gew.-% Vinylacetat enthaltenden Schaum des Beispiels 10 bei 6,5 und 8,0 m/min. flammkaschiert. Die Trennfestigkeiten sind in Tabelle 2 aufgeführt.

Beispiel 20: (Vergleich)

Es wurde ein Verbund aus PP/EPDM-Folie des Beispiels 2 und dem Polyethylen und EPDM enthaltenden Schaum des Beispiels 11 durch Flammkaschierung bei 8,0 und 10,0 m/min hergestellt. Die gemessenen Trennkräfte siehe Tabelle 2.

Beispiel 21:

Die im Beispiel 2 hergestellte PP/EPDM-Folie wurde mit dem Schaum aus Ethylenbutylacrylatmischpolymerisat und Polyethylen nach Beispiel 12 mit Geschwindigkeiten von 8,0 und 10,0 m/min flammkaschiert. Eine Trennung der beiden Substrate war nicht mehr möglich, da der Schaum vorher zerriß. Die Meßwerte befinden sich in Tabelle 2.

Beispiel 22:

Es wurde ein Verbund aus der PP/EPDM-Folie des Beispeils 2 und dem 19 Gew.-% Butylacrylat enthaltenden Schaum des Beispiels 13 durch Flammkasschierung mit 8,0 und 10,0 m/min hergestellt. Eine Trennung der beiden Substrate war nicht mehr möglich. Die Prüfwerte sind in Tabelle 2 aufgeführt.

Beispiel 23:

Die im Beispiel 1 hergestellte PP/EPDM-Folie wurde mit dem nach Beispiel 12 hergestellten Butylacrylat enthaltenden Schaum flammkaschiert bei 8,0 und 10,0 m/min und auf Trennfestigkeit geprüft. Prüfwerte siehe Tabelle 2.

Beispiel 24:

Die im Beispiel 4 hergestellte PP/EPDM-Folie wurde mit dem Schaum des Beispiels 12 bei 8,0 und 10,0 m/min flammkaschiert. Eine Trennung war nicht möglich (siehe Tabelle 2).

Wie aus der Tabelle 2 zu ersehen ist, erhält man keine befriedigenden Haftwerte, wenn eine Flammkaschierung zwischen einer PP/EPDM-Folie versucht wird mit einem reinen Polyethylenschaum (Beispiel 14), einem reinen Polyethylenschaum, dessen Oberseite mit einer Polyethylenfolie vorher kaschiert war (Beispiel 15), einem reinen Polyethylenschaum mit physikalischer Vernetzung (Beispiel 16), einem nur 9 Gew.-% Vinylacetat enthaltenden Polyethylenschaum (Beispiel 17) und einem EPDMenthaltenden Polyethylenschaum (Beispiel 20).

Eine befriedigende Haftung erreicht man bei der Flammkaschierung mit einem Schaum mit 15 Gew.-% Vinylacetat, wenn besonders langsam kaschiert wird, jedoch ist die Wirtschaftlichkeit noch sehr gering (Beispiel 18).

Eine verbesserte Wirtschaftlichkeit durch höhere Kaschiergeschwindigkeiten erreicht man mit einem Schaum mit 25 Gew.-% Vinylacetat (Beispiel 19).

Sehr gute Haftung, auch bei hohen Kaschiergeschwindigkeiten, erreicht man mit Butylacrylat enthaltenden Schäumen, wie die Beispiele 21 bis 23 belegen.

Die Erfindung ist in der Zeichnung beispielhaft dargestellt. Es zeigen

Figur 1 Ansicht einer Verbundfolie

Figur 2 Ansicht eines tiefgezogenen Formteils aus einer Verbundfolie

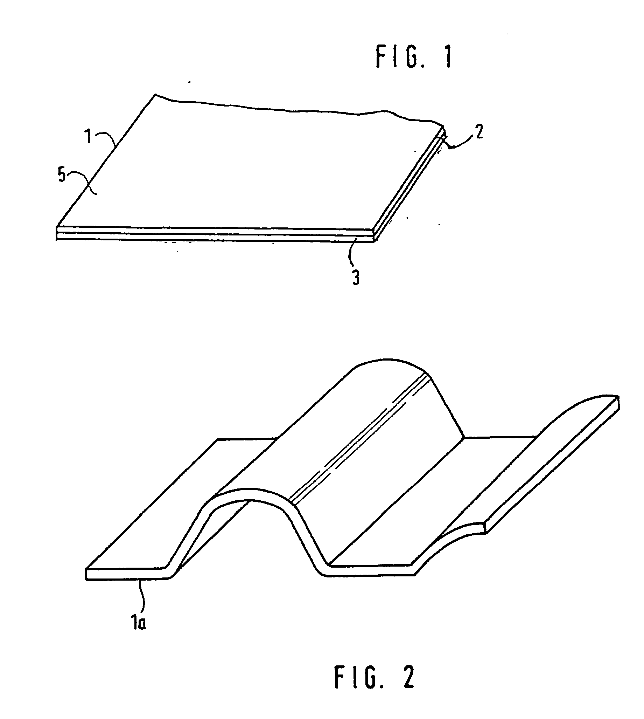

In der Figur 1 ist schematisch der Aufbau einer Verbundfolie 1 dargestellt. Die Folie 2, besteht im wesentlichen aus einer kalandrierten oder extrudierten Kunststoffolie aus Basis von EPDM und Propylen-

# EP 0 203 399 B1

Homopolymer und/oder Propylen Copolymer. Diese Folie, 2, die ggf. auf ihrer Oberseite 5 geprägt, sein kann, ist auf ihrer Unterseite mit der Schaumstoffschicht 3 haftfest verbunden. Die in Figur 1 dargestellte Verbundfolie 1 wird beispielsweise zu einem Formteil 1a gemäß Fig. 2 verformt. Diese Verformung kann beispielsweise mittels Tiefziehen erfolgen, wobei die Verbundfolie auf eine Temperatur von etwa 125 bis 150°C vorgewärmt und dann mittels Vakuum gegen eine Form verformt wird. Bei dieser Verformung kommt die Oberseite der Folie 2 zum Anliegen an die Form.

Es ist aber auch möglich, die Verbundfolie 1 gemäß Figur 1 unter Vorwärmung mittels einer Formpresse ebenfalls zu der gewünschten Form zu verpressen.

## TABELLE 1

| | Beispiele | | | | | | | | |
|---|---|---|---|---|---|---|---|---|---|
| | 5 | 6 | 7 | 8 | 9 | 10 | 11 | 12 | 13 |
| LD-PE (Gew.-Teile) | 100 | 100 | 100 | — | — | — | 71 | 25 | — |
| MFI (190/2,16) | 2 | 2 | 2 | — | — | — | 4 | 2 | — |
| Copolymeres (Gew.-Teile) | — | — | — | 100 | 100 | 100 | — | 75 | 100 |
| MFI (190/2,16) | — | — | — | 7 | 2,5 | 2,1 | — | 2 | 2 |
| Vinylacetatgehalt (Gew.-%) | — | — | — | 9 | 15 | 25 | — | — | — |
| Butylacrylatgehalt (Gew.-%) | — | — | — | — | — | — | — | 19 | 19 |
| EPDM (Gew.-Teile) | — | — | — | — | — | — | 29 | — | — |
| Azodicarbonamid (Gew.-Teile) | 19 | 19 | 23 | 13 | 19 | 19 | 23 | 23 | 19 |
| Dicumylperoxid (Gew.-Teile) | 0,9 | 0,9 | — | 0,9 | 0,9 | 0,9 | 0,9 | 0,9 | 0,9 |
| Matrix kaschiert mit PE-Folie | — | + | — | — | — | — | — | — | — |
| Schaumdicke (mm) | 10 | 10 | 5 | 6 | 10 | 10 | 5 | 5 | 10 |

## TABELLE 2

| Beispiel Nr. | Schaumdicke (mm) | Kaschiergeschwindigkeit (m/min) | Trennkraft N/5 cm) |
|---|---|---|---|
| 14 | 10 | 6,5 | 2,0 |
| " | 10 | 8,0 | 1,5 |
| 15 | 10 | 6,5 | 2,4 |
| " | 10 | 8,0 | 1,5 |
| 16 | 5 | 8,0 | 2,4 |
| " | 5 | 10,0 | 1,9 |
| 17 | 6 | 8,0 | 1,9 |
| " | 6 | 10,0 | 1,9 |
| 18 | 10 | 4,0 | >25,0* |
| " | 10 | 6,5 | 1,7 |
| " | 10 | 8,0 | 1,8 |
| 19 | 10 | 6,5 | >27,2* |
| " | 10 | 8,0 | 4,4 |
| 20 | 5 | 8,0 | 5,3 |
| " | 5 | 10,0 | 2,5 |
| 21 | 5 | 8,0 | >17,0* |
| " | 5 | 10,0 | >16,5* |
| 22 | 10 | 8,0 | >26,0* |
| " | 10 | 10,0 | >18,0* |
| 23 | 5 | 8,0 | >17,0* |
| " | 5 | 10,0 | >17,0* |
| 24 | 5 | 8,0 | >17,0* |
| " | 5 | 10,0 | >17,0* |

* Trennkraft der Substrate ist größer als Eigenfestigkeit des Schaumes. Daher Abriß oder Spaltung des Schaumes.

# EP 0 203 399 B1

## Patentansprüche

1. Witterungsbeständige, weichmacherfreie, unvernetzte und tiefziehbare Folie, insbesondere zur Verwendung bei der Innen- und Außenausstattung von Kraftfahrzeugen, auf Basis von Ethylen-Propylen-Dien-Terpolymeren, Homo- und/oder Copolymeren von Propylen und ggf. Füllstoffen und üblichen Zusatzstoffen, hergestellt durch Extrudieren oder Kalandrieren mit einer Foliendicke von etwa 0,2 bis 3 mm, gekenzeichnet durch einen Gehalt von 65 bis 25 Gew.-% eines teilkristallinen Ethylen-Propylen-Dien-Terpolymer mit

65 bis 82 Gew.-% Ethylen
18 bis 35 Gew.-% Propylen
3 bis 8 Gew.-% Terkomponente,

mit einem Schmelzindex MFI (230/5) von 0,5 bis 2,0 g/10 min, einer Zugfestigkeit von mindestens 10 N/mm$^2$ und einer DSC-Maximum-Temperatur von mindestens 40°C; 35 bis 75 Gew.-% Proyplen-Homopolymer und/oder Propylen-Copolymer mit einem Schmelzindex MFI (230/2,16) kleiner als 2 g/10 min, aber nicht kleiner als 0,2 g/10 min; 0 bis 10 Gew.-% Füllstoffe, wie Kreide, Kaolin, Talkum, Ruß, Kieselerde, Kieselsäureanhydrid oder dergl. oder Mischungen hiervon, sowie auf 100 Gew.-Teile der vorgenannten Kunststoffe

0,1 bis 1,0 Gew.-Teile Stabilisatoren wie sterisch gehinderte phenolische Antioxydantien, phenolische Phosphite, Thioester aliphatischer Carbonsäuren,
0,1 bis 2 Gew.-Teile Gleitmittel, wie Metallsalze der Carbonsäuren, Montansäureester, hydrierte Kohlenwasserstoffharze
0 bis 5 Gew.-Teile Farbmittel
0 bis 4 Gew.-Teile aliphatische und/oder naphtenische Extenderöle.

2. Folie nach Anspruch 1 gekennzeichnet durch einen Gehalt von 60 bis 40 Gew.-% Ethylen-Propylen-Dien-Terpolymer
40 bis 60 Gew.-% Homo und/oder Copolymer von Propylen
0 bis 6 Gew-% Füllstoffe

sowie auf 100 Gew.-Teile der vorgenannten Kunstoffe

0,1 bis 1,0 Gew.-Teile Stabilisatoren wie sterisch gehinderte phenolische Antioxydantien, phenolische Phosphite, Thioester aliphatischer Carbonsäuren,
0,1 bis 2 Gew.-Teile Gleitmittel, wie Metallsalze der Carbonsäuren, Montansäureester, hydrierte Kohlenwasserstoffharze
0 bis 5 Gew.-Teile Farbmittel
0 bis 4 Gew.-Teile aliphatische und/oder naphtenische Extenderöle,

wobei die Folie in Längsrichtung eine Reißfestigkeit von mindestens 20 N/mm$^2$ vorzugsweise 25 bis 28 N/mm$^2$ sowie eine Reißdehnung von mindestens 450% vorzugsweise von mindestens 550% und eine Kälteschlagwert nach VDCh von mindestens −50°C aufweist.

3. Folie nach Anspruch 1, gekennzeichnet durch einen Gehalt von

45 bis 25 Gew.-% Ethylen-Propylen-Dien-Terpolymer
75 bis 55 Gew.-% Homo- und/oder Coplymer von Propylen
0 bis 6 Gew.-% Füllstoffe

sowie auf 100 Gew.-Teile der vorgenannten Kunststoffe

0,1 bis 1,0 Gew.-Teile Stabilisatoren wie sterisch gehinderte phenolische Antioxydantien, phenolische Phosphite, Thioester aliphatischer Carbonsäuren,
0,1 bis 2 Gew.-Teile Gleitmittel, wie Metallsalze der Carbonsäure, Montansäureester, hydrierte Kohlenwasserstoffharze
0 bis 5 Gew.-Teile Farbmittel
0 bis 4 Gew.-Teile aliphatische und/oder naphtenische Extenderöle.

wobei die Folie in Längsrichtung eine Reißfestigkeit von mindestens 24 N/mm$^2$, vorzugseweise von 26 bis 28 N/mm$^2$ sowie eine Reißdehnung von mindestens 450%, vorzugsweise mindestens 500% aufweist.

4. Folie nach einem der Ansprüche 1 bis 3, dadurch gekennzeichnet, daß ein Ethylen-Propylen-Dien-Terpolymer mit einer Zugfestigkeit von mindestens 15 N/mm$^2$ eingesetzt ist.

5. Folie nach einem der Ansprüche 1 bis 4, dadurch gekennzeichnet, daß ein Ethylen-Propylen-Dien-Terpolymer mit einer DSC-Maximumtemperatur von mindestens 43°C eingesetzt ist.

6. Folie nach einem der Ansprüche 1 bis 5, dadurch gekennzeichnet, daß ein Ethylen-Propylen-Dien-Terpolymer mit einem Ethylengehalt von mindestens 70 Gew.-% eingesetzt ist.

7. Folie nach einem der Ansprüche 1 bis 6, dadurch gekennzeichnet, daß ein Propylen-Homopolymer und/oder Propylen-Copolymer mit einem Schmelzindex MFI (230/2,16) kleiner 1 g/10 min eingesetzt ist.

8. Folie nach einem der Ansprüche 1 bis 7, dadurch gekennzeichnet, daß ein Propylen-Copolymer mit einem Ethylengehalt von 5 bis 20 Gew.-% verwendet ist.

9. Folie nach einem der Ansprüche 1 bis 8, dadurch gekennzeichnet, daß Füllstoffe mit einer maximalen Teilchengröße, bestimmt beim Durchgang durch ein 30 µm Sieb, vorzugsweise 10 µm Sieb eingesetzt sind.

10. Folie nach einem der Ansprüche 1 bis 9, dadurch gekennzeichnet, daß eine Seite mit einer Schicht aus einem vernetzten Polyolefinschaum, bei dem in 100 Gew.-Teilen Polyolefinharz bzw. -harzgemische

11

mindestens 15 Gew-%, vorzugsweise mindestens 20 Gew.-%, an polaren, den copolymerisierten Monomeren entsprechenden Gruppen enthalten sind, unmittelbar haftfest thermo- oder flammkaschiert ist.

11. Folie nach Anspruch 10, dadurch gekennzeichnet, daß die Trennkraft zwischen PP/EPDM-Folie und Schaumstoffschicht mindestens 8 N/5 cm, vorzugsweise mehr als 12 N/5 cm, beträgt, und insbesondere höher als die Eigenfestigkeit des Schaumstoffes ist.

12. Folie nach Anspruch 10 oder 11, dadurch gekennzeichnet, daß als polares copolymerisiertes Monomer Butylacrylat in einer Menge von mindestens 15 Gew.-% bezogen auf das Polyolefinharz bzw. -harzgemisch, vorgesehen ist.

13. Folie nach Anspruch 10 oder 11, dadurch gekennzeichnet, daß als polares copolymerisiertes Monomer Vinylacetat in einer Menge von mindestens 20 Gew.-%, bezogen auf das Polyolefinharz bzw. -harzgemisch, vorgesehen ist.

14. Verfahren zum Herstellen einer Folie gemäß einem der Ansprüche 1 bis 9, dadurch gekennzeichnet, daß eine Masse enthaltend

65 bis 25 Gew.-% eines teilkristallinen Ethylen-Propylen-Dien-Terpolymer mit

65 bis 82 Gew.-% Ethylen

18 bis 35 Gew.-% Propylen

3 bis 8 Gew.-% Terkomponente,

mit einem Schmelzindex MFI (230/5) von 0,5 bis 2,0 g/10 min, einer Zugfestigkeit von mindestens 10 N/mm$^2$ und einer DSC-Maximumtemperatur von mindestens 40°C; 35 bis 75 Gew.-% Propylen-Homopolymer und/oder Propylen-Copolymer mit einem Schmelzindex MFI (230/2,16) kleiner als 2 g/10 min, aber nicht kleiner als 0,2 g/10 mm; 0 bis 10 Gew.-% Füllstoffe, wie Kreide, Kaolin, Talkum, Ruß, Kieselerde, Kieselsäureanhydrid oder dergl. oder Mischungen hiervon sowie auf 100 Gew.-Teile der vorgenannten Kunststoffe

0,1 bis 1,0 Gew.-Teile Stabilisatoren wie sterisch gehinderte phenolische Antioxydantien, phenolische Phosphite, Thioester aliphatischer Carbonsäuren,

0,1 bis 2 Gew.-Teile Gleitmittel, wie Metallsalze der Carbonsäuren, Montansäureester, hydrierte Kohlenwasserstoffharze

0 bis 5 Gew.-Teile Farbmittel

0 bis 4 Gew.-Teile aliphatische und/oder naphthenische Extenderöle,

die einen Schmelzindex MFI (230/5) von etwa 0,8 bis etwa 8, vorzugsweise 1 bis 6 g/10 min. aufweist, unter Erwärmung auf eine Temperatur von etwa 50 bis etwa 80°C gemischt und bei Einwirken von höheren Temperaturen von etwa 170 bis 210°C weiter plastifiziert und homogenisiert wird und bei Einwirken von maximalen Temperaturen von etwa 165 bis etwa 210°C zu Folien einer Dicke von 0,2 bis etwa 1,5 mm kalandriert oder zu Folien einer Dicke von etwa 0,7 bis 4 mm bei Massetemperaturen von 190 bis 260°C extrudiert werden.

15. Verfahren nach Anspruch 14, dadurch gekennzeichnet, daß die kalandrierte Folie inline auf einer Oberflächenseite bei einer Massetemperatur von 110 bis 170°C und einer Prägewalzentemperatur von 80°C bis 140°C und eine Prägedruck von 20 bis 100 bar geprägt wird.

## Revendications

1. Feuille non réticulée et emboutissable, résistant aux intempéries et sans plastifiants, notamment pour l'utilisation dans l'équipement intérieur et extérieur de véhicules automobiles, à base de terpolymères d'éthylène-propylène-diène, d'homopolymères et/ou de copolymères de propylène et, le cas échéant, de charges et d'additifs habituels, fabriquée par extrusion ou calandrage avec une épaisseur de feuille d'environ 0,2 à 3 mm, caractérisée par une teneur de 65 à 25% en poids d'un terpolymère d'éthylène-propylènediène partiellement cristallin contenant

65 à 82% en poids d'éthylène

18 à 35% en poids de propylène

3 à 8% en poids de troisième composant,

avec un indice de fusion IFC (230/5) de 0,5 à 2,0 g/10 min., une résistance à la traction d'au moins 10 N/mm$^2$ et une température de maximum en AED d'au moins 40°C; 35 à 75% en poids d'homopolymère de propylène et/ou de copolymère de propylène avec un indice de fusion IFC (230/2,16) inférieur à 2 g/10 min., mais pas inférieur à 0,2 g/10 min.; 0 à 10% en poids de charges telles que de la craie, du kaolin, du talc, de la suie, de la silice, de l'anhydride d'acide silicique ou analogue ou des mélanges de ceux-ci, ainsi que, pour 100 parties en poids des matières plastiques précitées,

0,1 à 1,0 parties en poids de stabilisants tels que des antioxydants phénoliques stériquement encombrés, des phosphites phénoliques, des thioesters d'acides carboxyliques aliphatiques,

0,1 à 2 parties en poids de lubrifiants tels que des sels métalliques d'acides carboxyliques, des esters d'acide montanique, des résines hydrocarbonées hydrogénées,

0 à 5 parties en poids de colorants,

0 à 4 parties en poids d'huiles diluantes aliphatiques et/ou nathténiques.

2. Feuille selon la revendication 1, caractérisée par une teneur de

60 à 40% en poids de terpolymère d'éthylène-propylène-diène,

40 à 60% en poids d'homopolymère et/ou de copolymère de propylène,

0 à 6% en poids de charges,

ainsi que, pour 100 parties en poids des matières plastiques précitées, de

0,1 à 1,0 parties en poids de stabilisants tels que des antioxydants phénoliques stériquement encombrés, des phosphites phénoliques, des thioesters d'acides carboxyliques aliphatiques,

0,1 à 2 parties en poids de lubrifiants tels que des sels métalliques d'acides carboxyliques, des esters d'acide montanique, des résines hydrocarbonées hydrogénées,

0 à 5 parties en poids de colorants,

0 à 4 parties en poids d'huiles diluantes aliphatiques et/ou naphténiques,

la feuille présentant dans le sens longitudinal une résistance à la rupture d'au moins 20 N/mm², de préférence 25 à 28 N/mm², ainsi qu'une élongation à la rupture d'au moins 450%, de préférence d'au moins 550%, et un point de fragilité à basse température selon VDCh d'au moins −50°C.

3. Feuille selon la revendication 1, caractérisée par une teneur de

45 à 25% en poids de terpolymère d'éthylène-propylène-diène, 75 à 55% en poids d'homopolymère et/ou de copolymère de propylène,

0 à 6% en poids de charges,

ainsi que, pour 100 parties en poids des matières plastiques précitées, de

0,1 à 1,0 parties en poids de stabilisants tels que des antioxydants phénoliques stériquement encombrés, des phosphites, phénoliques, des thioesters d'acides carboxyliques aliphatiques,

0,1 à 2 parties en poids de lubrifiants tels que des sels métalliques, d'acides carboxyliques, des esters d'acide montanique, des résines hydrocarbonées hydrogénées,

0 à 5 parties en poids de colorants,

0 à 4 parties en poids d'huiles diluantes aliphatiques et/ou naphténiques,

la feuille présentant dans le sens longitudinal une résistance à la rupture d'au moins 24 N/mm², de préférence 26 à 28 N/mm², ainsi qu'une élongation à la rupture d'au moins 450%, de préférence d'au moins 500%.

4. Feuille selon l'une des revendications 1 à 3, caractérisée par le fait qu'un terpolymère d'éthylène-propylène-diène avec une résistance à la traction d'au moins 15 N/mm² est utilisé.

5. Feuille selon l'une des revendications 1 à 4, caractérisée par le fait qu'un terpolymère d'éthylène-propylène-diène avec une température de maximum en AED d'au moins 43°C est utilisé.

6. Feuille selon l'une des revendications 1 à 5, caractérisée par le fait qu'un terpolymère d'éthylène-propylène-diène avec une teneur en éthylène d'au moins 70% en poids est utilisé.

7. Feuille selon l'une des revendications 1 à 6, caractérisée par le fait qu'un homopolymère de propylène et/ou un copolymère de propylène avec un indice de fusion IFC (230/2,16) inférieur à 1 g/10 min. est utilisé.

8. Feuille selon l'une des revendications 1 à 7, caractérisée par le fait qu'un copolymère de propylène avec une teneur en éthylène de 5 à 20% en poids est utilisé.

9. Feuille selon l'une des revendications 1 à 8, caractérisée par le fait que des charges avec une taille de particules maximale, déterminée par passage au tamis de 30 μm, de préférence au tamis de 10 μm, sont utilisées.

10. Feuille selon l'une des revendications 1 à 9, caractérisée par le fait qu'un côté est doublé à la flamme ou à la chaleur directement et de façon adhérente, avec une couche d'une mousse polyoléfinique réticulée, dans laquelle 100 parties en poids de résine ou de mélange de résine polyoléfinique contiennent au moins 15% en poids, de préférence au moins 20% en poids, de groupes polaires correspondant aux monomères copolymérisés.

11. Feuille selon la revendication 10, caractérisée par le fait que la force de séparation entre la feuille PP/EPDM et la couche de mousse est d'au moins 8 N/5 cm, de préférence supérieure à 12 N/5 cm, et est notamment supérieure à la résistance propre de la mousse.

12. Feuille selon la revendication 10 ou 11, caractérisée par le fait qu'en tant que monomère polaire copolymérisé, on emploie de l'acrylate de butyle en une quantité d'au moins 15% en poids par rapport à la résine ou au mélange de résine polyoléfinique.

13. Feuille selon la revendication 10 ou 11, caractérisée par le fait qu'en tant que monomère polaire copolymérisé, on emploie de l'acétate de vinyle en une quantité d'au moins 20% en poids par rapport à la résine ou au mélange de résine polyoléfinique.

14. Procédé de fabrication d'une feuille selon l'une des revendications 1 à 9, caractérisé par le fait qu'une masse contenant 65 à 25% en poids d'un terpolymère d'éthylène-propylène-diène partiellement cristalline contenant

65 à 82% en poids d'éthylène

18 à 35% en poids de propylène

3 à 8% en poids de troisième composant,

avec un indice de fusion IFC (230/5) de 0,5 à 2,0 g/10 min., une résistance à la traction d'au moins 10 N/mm² et une température de maximum en AED d'au moins 40°C; 35 à 75% en poids d'homopolymère de

13

propylène et/ou de copolymère de propylène avec un indice de fusion IFC (230/2,16) inférieur à 2 g/10 min; mais pas inférieur à 0,2 g/10 min; 0 à 10% en poids de charges telles que de la craie, du kaolin, du talc, de la suie, de la silice, de l'anhydride d'acide silique ou analogue ou des mélanges de ceux-ci, ainsi que, pour 100 parties en poids des matières plastiques précitées,

  0,1 à 1,0 parties en poids de stabilisants tels que des antioxydants phénoliques stériquement encombrés, des phosphites phénoliques, des thioesters d'acides carboxyliques aliphatiques,

0,1 à 2  parties en poids de lubrifiants tels que des sels métalliques d'acides carboxyliques, des esters d'acide montanique, des résines hydrocarbonées hydrogénées,

  0  à 5  parties en poids de colorants,

  0  à 4  parties en poids d'huiles diluantes aliphatiques et/ou naphténiques,

qui présente un indice de fusion IFC (230/5) d'environ 0,8 à environ 8, de préférence 1 à 6 g/10 min., est mélangée avec échauffement jusqu'à une température d'environ 50 à environ 80°C et, sous l'influence de températures plus élevées, d'environ 170 à 210°C, est plastifiée et homogénéisée davantage et, sous l'influence de températures maximales d'environ 165 à environ 210°C, est calandrée en feuilles d'une épaisseur de 0,2 jusqu'à environ 1,5 mm, ou extrudée en feuilles d'une épaisseur d'environ 0,7 à 4 mm, avec des températures de masse de 190 à 260°C.

15. Procédé selon la revendication 14, caractérisé par le fait que la feuille calandrée est estampée en ligne sur une surface, à une température de masse de 110 à 170°C et une température de cylindre d'estampage de 80 à 140°C, et sous une pression d'estampage de 20 à 100 bars.


**Claims**

1. Weathering resistant, plasticiser free, uncrosslinked and deep drawable foil, in particular for use in the internal and external equipping of motor vehicles, based on ethylene-propylene-diene-terpolymers, homo- and/or copolymers of propylene and optionally fillers and usual additives, produced by extrusion or calendering with a foil thickness of about 0.2 to 3 mm, characterised by a content of 65 to 25% by weight of a partially crystalline ethylene-propylene-diene-terpolymer with

  65 to 82% by weight ethylene

  18 to 35% by weight propylene

  3 to  8% by weight tercomponent,

with a melt index MFI (230/5) of 0.5 to 2.0 g/10 min, a tensile strength of at least 10 N/mm² and a DSC-maximum temperature of at least 40°C;

35 to 75% by weight of propylene-homopolymer and/or propylene-copolymer with a melt index MFI (230/2.16) less than 2 g/10 min, but not less than 0.2 g/10 min; 0 to 10% by weight of fillers like chalk, kaolin, talc, carbon black, silica, silicic acid anhydride or the like, or mixtures thereof, as well as, per 100 parts by weight of the aforementioned plastics,

  0.1 to 1.0 parts by weight of stabilisers like sterically hindered phenolic antioxidants, phenolic phosphites, thioesters of aliphatic carboxylic acids,

  0.1 to 2  parts by weight of lubricants like metal salts of carboxylic acids, montan acid esters, hydrated hydrocarbon resins,

  0  to 5  parts by weight of colourants

  0  to 4  parts by weight of aliphatic and/or naphthenic extender oils.

2. Foil according to Claim 1, characterised by a content of 60 to 40% by weight of ethylene-propylene-diene-terpolymer

  40 to 60% by weight of homo and/or copolymer of propylene

  0 to 6% by weight of fillers

as well as, per 100 parts by weight of the aforementioned plastics,

  0.1 to 1.0 parts by weight of stabilisers like sterically hindered phenolic antioxidants, phenolic phosphites, thioesters of aliphatic carboxylic acids,

  0.1 to 2  parts by weight of lubricants like metal salts of carboxylic acids, montan acid esters, hydrated hydrocarbon resins

  0  to 5  parts by weight of colourants

  0  to 4  parts by weight of aliphatic and/or naphthenic extender oils,

wherein the foil in the longitudinal direction has a tearing strength of at least 20 N/mm², preferably 25 to 28 N/mm² as well as an elongation at break of at least 450%, preferably at least 550% and a cold impact value according to VDCh of at least −50°C.

3. Foil according to Claim 1, characterised by a content of

  45 to 25% by weight of ethylene-propylene-diene-terpolymer

  75 to 55% by weight of homo- and/or copolymer of propylene

  0 to 6% by weight of fillers

as well as, per 100 parts by weight of the aforementioned plastics,

  0.1 to 1.0 parts by weight of stabilisers like sterically hindered phenolic antioxidants, phenolic phosphites, thioesters of aliphatic carboxylic acids,

0.1 to 2    parts by weight of lubricants like metal salts of carboxylic acids, montan acid esters, hydrated hydrocarbon resins

0   to 5    parts by weignt of colourants

0   to 4    parts by weight of aliphatic and/or naphthenic extender oils

wherein the foil in the longitudinal direction has a tear strength of at least 24 N/mm$^2$, preferably 26 to 28 N/mm$^2$, as well as an elongation at break of at least 450%, preferably at least 500%.

4. Foil according to one of Claims 1 to 3, characterised in that an ethylene-propylene-diene-terpolymer with a tensile strength of at least 15 N/mm$^2$ is employed.

5. Foil according to one of Claims 1 to 4, characterised in that an ethylene-propylene-diene-terpolymer with a DSC-maximum temperature of at least 43°C is employed.

6. Foil according to one of Claims 1 to 5, characterised in that an ethylene-propylene-diene-terpolymer with an ethylene content of at least 70% by weight is employed.

7. Foil according to one of Claims 1 to 6, characterised in that a propylene-homopolymer and/or propylene-copolymer with a melt index MFI (230/2.16) of less than 1 g/10 min is employed.

8. Foil according to one of Claims 1 to 7, characterised in that a propylene copolymer with an ethylene content of 5 to 20% by weight is employed.

9. Foil according to one of Claims 1 to 8, characterised in that fillers with a maximum particle size, determined by through passage through a 30 µm sieve, preferably 10 µm sieve, are employed.

10. Foil according to one of Claims 1 to 9, characterised in that one side is thermally or flame laminated to be directly adhered to a layer of a cross-linked polyolefin foam in which at least 15% by weight, preferably at least 20% by weight of polar groups corresponding to the copolymerised monomers are contained in 100 parts by weight of polyolefin resin or resin mixture.

11. Foil according to Claim 10, characterised in that the separating force between PP/EPDM-foil and foam layer amounts to at least 8 N/5 cm, preferably more than 12 N/5 cm, and in particular higher than the self-strength of the foam.

12. Foil according to Claim 10 or 11, characterised in that butyl acrylate is provided as polar copolymerised monomer in an amount of at least 15% by weight related to the polyolefin resin or resin mixture.

13. Foil according to Claim 10 or 11, characterised in that vinylacetate is provided as polar copolymerised monomer in an amount of at least 20% by weight related to the polyolefin resin or resin mixture.

14. Process for the production of a foil according to one of Claims 1 to 9, characterised in that a composition containing

65 to 25% by weight of a partially crystallised ethylene-propylene-diene-terpolymer with

65 to 82% by weight ethylene

18 to 35% by weight propylene

3 to 8% by weight tercomponent

with a melt index MFI (230/5) of 0.5 to 2.0 g/10 min, a tensile strength of at least 10 N/mm$^2$ and a DSC-maximum temperature of at least 40°C, 35 to 75% by weight of propylene-homopolymer and/or propylene-copolymer with a melt index MFI (230/2.16) less than 2 g/10 min, but not less than 0.2 g/10 min; 0 to 10% by weight of fillers like chalk, kaolin, talc, carbon black, silica, silicic acid anhydride or the like or mixtures thereof as well as, per 100 parts by weight of the aforementioned plastics,

0.1 to 1.0  parts by weight of stabilisers like sterically hindered phenolic antioxidants, phenolic phosphites, thioesters of aliphatic carboxylic acids,

0.1 to 2    parts by weight of lubricants like metal salts of carboxylic acids, montan acid esters, hydrated hydrocarbon resins

0   to 5    parts by weight of colourants

0   to 4    parts by weight of aliphatic and/or naphthenic extender oils,

which composition has a melt index MFI (230/5) of about 0.8 to about 8, preferably 1 to 6 g/10 min, is mixed while undergoing heating to a temperature of about 50 to about 80°C and, on application of higher temperatures of about 170 to 210°C is further plasticised and homogenised and when subjected to maximum temperature of about 165 to about 210°C is calendered to foils of a thickness of 0.2 to about 1.5 mm or extruded to foils of a thickness of about 0.7 to 4 mm at composition temperatures of 190 to 260°C.

15. Process according to Claim 14, characterised in that the calendered foil is embossed in line on a surface at a composition temperature of 110 to 170°C and an embossing roller temperature of 80°C to 140°C and an embossing pressure of 20 to 100 bar.

FIG. 1

1

5

2

3

1a

FIG. 2